# EUROPEAN PATENT APPLICATION

(11) **EP 2 899 063 A1**
(43) Date of publication of application: **29.07.2015**
(21) Application number: 14275015.7
(22) Date of filing: 23.01.2014
(51) Int. Cl.: B60N 2/39, B63B 29/12, B64C 17/06

(54) **Self-levelling seating platform**

(71) Applicant: BAE Systems PLC, London SW1Y 5AD (GB)
(72) Inventor: The designation of the inventor has not yet been filed
(74) Representative: BAE SYSTEMS plc Group IP Department

(57) **Abstract**

The invention relates to a self-levelling seating platform which does not require actuators or motors to self-level. The seating platform is designed for use in a vehicle. It allows movement in two axes to counteract the motion of a vehicle, thereby maintaining a user of the seating platform in a substantially level position with respect to the horizon. The self-levelling seating platform (10) includes a first frame (12) pivotally attached to a second frame (16) which allows pivotal motion of the first frame relative to the second frame, said second frame being pivotally attached to an outer frame (22) to allow pivotal motion of the second frame relative to the outer frame wherein the pivotal motion of the first frame with respect to the second frame is substantially at right angles to the pivotal motion of the second frame with respect to the outer frame.

## Description

The present invention relates to a self-levelling seating platform and more particularly a self-levelling seating platform for use on or within a vehicle.

When a vehicle pitches and/or heels or rolls it can cause a person within or on the vehicle to become disorientation and/or may cause the person motion sickness. These are undesirable results of the motion of a vehicle. For example, if the vehicle is a marine vessel, heeling of the vessel is when it leans over to one side which may be caused by wind, waves or the ship or boat turning, whereas pitching is the rotation of a marine vehicle about its transverse axis. Such movement of the marine vessel may cause a vehicle operator or passenger to become unwell as a result of the motion of a vehicle. It will be understood that other vehicle, such aircraft or a land vehicles can similarly be the subjection of motion such as rolling in the form of rotation of the vehicle is about the vehicles longitudinal axis and/or pitching in the form of rotation of the vehicle around it lateral axis.

It is desirable to reduce or eliminate vehicle motion and its effect on an occupant in the form of pitching and/or heeling effects of a marine vessel or the roll and/or pitching of an aircraft or land vehicle by providing a seating platform on or in the vehicle which counteracts the effect. It is desirable that the seating platform maintains the operator, user or occupant in a position which is substantially level with the horizon when the vehicle in which the platform is placed pitches and/or heels in the case of a marine vessel or pitches and/or rolls in the case on an aircraft or land vehicle. It is a further desirable that the seating platform is self-levelling so that a complicated system of actuators, motors and gears are not required.

The present invention seeks to obviate or mitigate these problems. An aspect of invention provides a self-levelling seating platform including a first frame pivotally attached to a second frame which allows pivotal motion of the first frame relative to the second frame, said second frame being pivotally attached to an outer frame to allow pivotal motion of the second frame relative to the outer frame wherein the pivotal motion of the first frame with respect to the second frame is substantially at right angles to the pivotal motion of the second frame with respect to the outer frame.

It will be understood that the self-levelling seating platform may be mounted to a vehicle such that pivotal motion of the first frame with respect to the second frame counteracts pitching and the pivotal motion of the second frame with respect to the outer frame counteracts heeling (in marine vessels) or roll (in aircraft or land vehicles). Alternatively, the self-levelling seating platform may be mounted to a vehicle such that pivotal motion of the second frame with respect to the outer frame counteracts pitching and the pivotal motion of the first frame with respect to the second frame counteracts heeling (in marine vessels) or roll (in aircraft or land vehicles)

In this manner, the platform is passive and does not require actuators or motors to self-level. The self-levelling means that the user of the seating platform is maintained in a position substantially level with the horizon in spite of the motion of the vehicle in which the self-levelling seating platform is installed as it can allow movement along two axes simultaneously. It is a further advantage of the invention that the self-levelling seating platform allows users who are unable to use their core muscles, whether through injury or disability, to remain substantially level with respect to the horizon when on or in a vehicle.

In an embodiment the second frame has extending arms and the first frame can be pivotally connected to the second frame towards a distal end of the extending arms. In an embodiment the pivotal connection is vertically off-set from the second frame.

In an embodiment the second frame has extending arms and the first frame has extending suspension arms, said extending arms and extending suspension arms are pivotally attached to one another by a bearing to allow the extending suspension arms to pivot about a point on the extending arms. The bearing has a shaft which passes through the extending arms and suspension arms. In a preferred embodiment there are two extending arms and suspension arms each being located on opposite side of the second and first frames, respectively. As the first frame is suspended from each of the extending arms on the second frame the pivot point allows the motion of the first frame to counteract the lateral motion of a vehicle in which the platform is used.

In a preferred embodiment the self-levelling seating platform the second frame is attached to the outer frame by an elongate support member. The connection between the elongate support member and the outer frame allows pivotal motion and can be achieved by using a transverse bearing seat. This bearing is preferably above a user's centre of gravity thereby allowing the second frame to act like a pendulum and therefore allows the user to remain substantially level in a transverse direction. Preferably, the outer frame is attachable to a vehicle so that it is aligned with the pitching and heeling of the vehicle to which it is attached. In a preferred embodiment the vehicle is a ship or boat.

The pivotal connections between the outer frame and second frame and the first frame and second frame allows the seating platform to remain substantially level with respect to the horizon in spite of the vehicle's motion by virtue of being able to move in two axes simultaneously. The axes are perpendicular to one another. It also allows for the first and second frames to move independently of one another.

In a preferred embodiment the outer frame includes at least one guide rail which supports the second frame to relieve the weight on the bearing connecting the elongate member to the outer frame. Preferably the at least one guide rail has an arcuate form to allow a pendulum motion of the second frame on the at least one guide rail. In an embodiment there is a transverse sliding base attachable to the at least one guide rail and, in use, the sliding base is arranged to support the second frame. The slide base may have a cushion, postural support or like which has been placed on or in the first frame can rest. The transverse sliding base allows for the second frame to move more freely on the at least one guide rail. The sliding base can be configured to slide, glide or roll on the guide rails. For example, it may have rollers or bearings or include a low friction material thereon.

In a second aspect of the invention, a vehicle includes a self-levelling seating platform as described herein.

The invention may be performed in various ways and an embodiment thereof will now be described by way of example only, reference being made to the accompanying drawings in which:
Figure 1 is a perspective view of the self-levelling seating platform according to an embodiment of the invention.
Figure 2 shows a profile view of the self-levelling seating platform according to the invention.
Figure 3 shows a front view of the self-levelling seating platform according to the invention.

It will be understood that the following example is describe with reference to a marine vessel, but could also apply to an aircraft or a land vehicle.

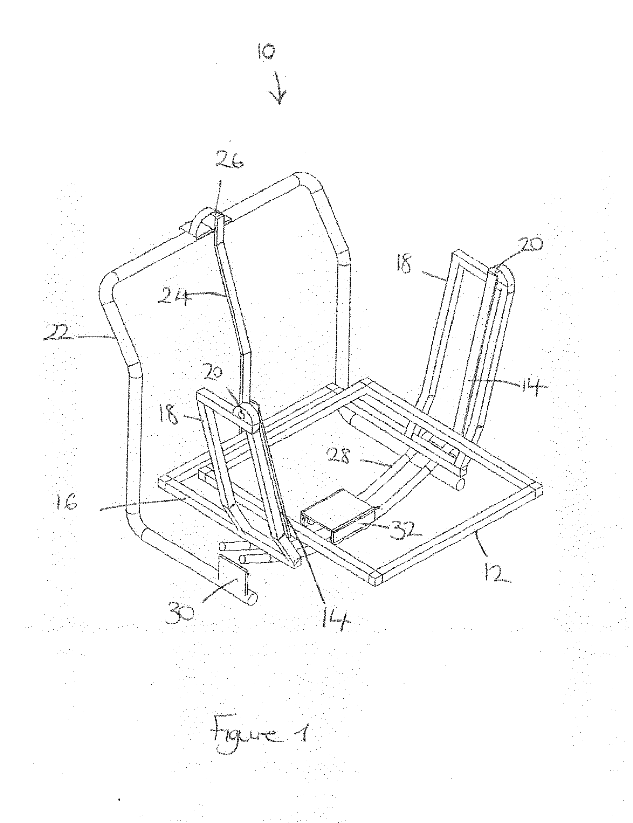

Figure 1 shows a perspective view of a self-levelling seating platform 10 having a first frame 12 having suspension arms 14, a second frame 16 having upwardly extending arms 18 to which the suspension arms 14 are pivotally attached at a pivot point 20. The second frame 16 is attached to an outer frame 22 by an elongate member 24. The elongate member 24 is pivotally attached to outer frame 22 at pivot point 26. Pivot points 20 and 26 include bearings and rotary dampers. The outer frame 22 further includes guide rails 28 attached thereto by guide rail support plates 30 (shown exploded in this figure). A transverse rolling base 32 is connected to the guide rails 28. The rolling base 32 has bearings or wheels to allow it to roll along the guide rails 28. In use the guide rails 28 and the rolling base 32 acts to support the second frame 16 to reduce the load on the pivot point 26. The rolling base 32 supports the underside of a cushioned base, postural support or the like (not shown for clarity).

The outer frame 22 is suitable secured to a marine vessel, such that the outer frame 22 is aligned with the pitching and heeling of the vessel to which it is attached. As the vessel to which outer frame 22 is attached moves, the self-levelling seating platform will move. As the vehicle heels, the second frame will move about pivot point 26 with the elongate member 24 acting as a pendulum with the user acting as the mass at the end of the pendulum. When the seating platform is in use, the rolling base 32 supports the second frame 16 and aids the movement by virtue of the rollers on the rolling base 32 moving on the guide rails 28. This movement keeps the seat of self-levelling seating platform in which an occupant sits substantially level with respect to the horizon to thereby counteract heeling motion. As the vehicle pitches, the first frame 12 pivots around pivot point 20. The suspension arms 14 act as pendulums and to allow the first frame 12 to move thereby counteracting the pitching motion of the vehicle.

It will of course be understood that should the self-levelling seating platform 10 be arranged in a different direction with respect to the primary axis of the vehicle, such that the second frame 16 and its pivot 26 with the outer frame 22 will correct for pitching motion, whilst the first frame 12 and its pivot 20 with the second frame 16 will correct for motion for heeling motion of the vehicle.

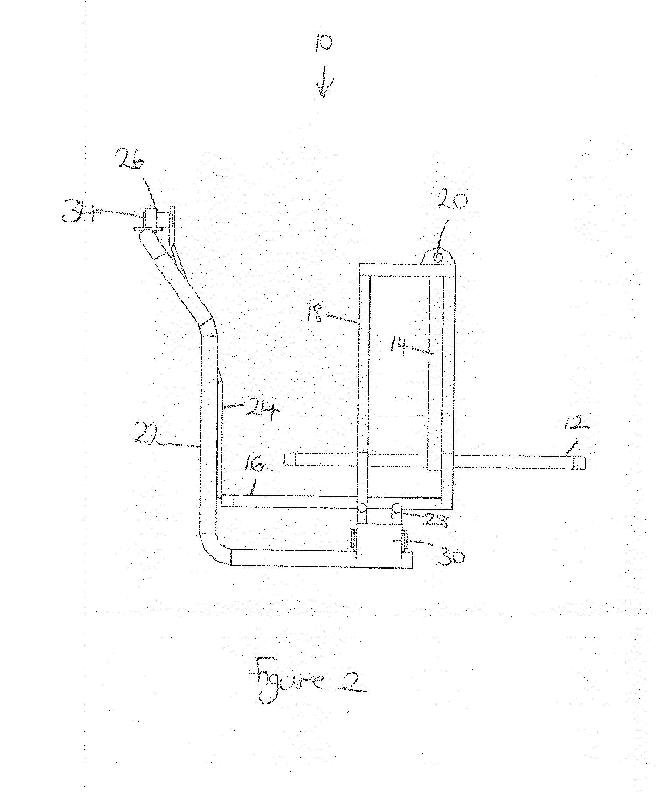

Figure 2, wherein like references have been used to indicate similar integers to those described with reference to Figure 1, shows a profile view of the embodiment of the invention shown in Figure 1. Here is can be seen that the guide rail support plate 30 is connected to the guide rails 28 and the outer frame 22. The pivot point 26 is more clearly shown as is a transverse bearing seat 34.

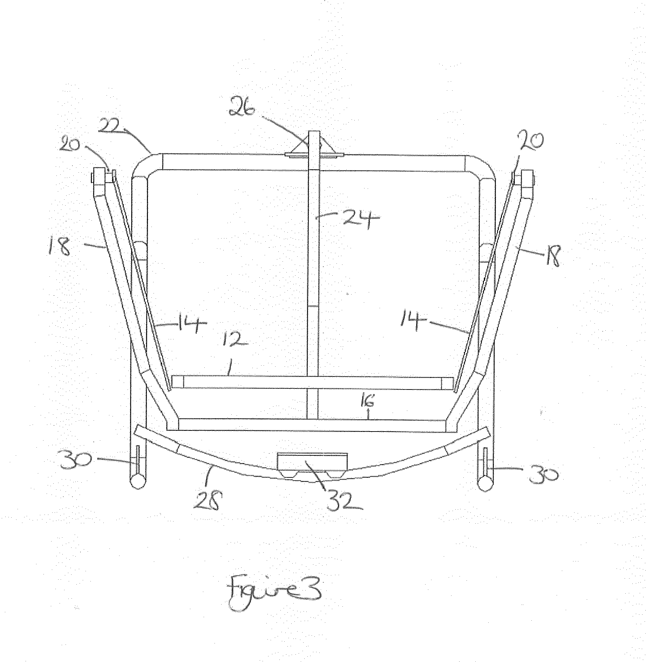

Figure 3, wherein like references have been used to indicate similar integers to those described with reference to Figures 1 and 2, shows a front view of the embodiment shown in the other two figures. The second frame 16 is shown as not being in contact with the rolling base 32 on the guide rails 28. When the platform 10 is in use the weight of the user will force the second frame 16 into contact with the guide rails 28 The guide rail support plates 30 are shown as not being connected to the guide rail 28 in this figure but in reality are. Ideally, the plates are welded to the guide rails.

Variants, modifications, additions and omissions relating to the description above are possible within the ambit of the invention and will be readily apparent to the skilled addressee.

## Claims

1. A self-levelling seating platform including:
a first frame pivotally attached to a second frame which allows pivotal motion of the first frame relative to the second frame, said second frame being pivotally attached to an outer frame to allow pivotal motion of the second frame relative to the outer frame wherein the pivotal motion of the first frame with respect to the second frame is substantially at right angles to the pivotal motion of the second frame with respect to the outer frame.

2. A self-levelling seating platform according to claim 1 wherein the second frame has extending arms and the first frame is pivotally connected to the second frame towards a distal end of the extending arms.

3. A self-levelling seating platform according to claim 1 or claim 2 wherein the second frame has extending arms and the first frame has extending suspension arms, said extending arms and extending suspension arms are pivotally attached to one another by a bearing to allow the extending suspension arms to pivot about a point on the extending arms.

4. A self-levelling seating platform according to any preceding claim wherein the second frame is attached to the outer frame by an elongate support member.

5. A self-levelling seating platform according to any preceding claim wherein the pivotal attachment is achieved by bearings.

6. A self-levelling seating platform according to any preceding claim wherein the outer frame has at least one guide rail attached thereto.

7. A self-levelling seating platform according to claim 6 wherein the at least one guide rail has an arcuate form.

8. A self-levelling seating platform according to claim 6 or claim 7 including a sliding base which is attach to the at least one guide rail and, in use, the sliding base is arranged to support the second frame.

9. A self-levelling seating platform according to any preceding claim wherein the outer frame is attachable to a vehicle.

10. A vehicle including the self-levelling seating platform according to any of claims 1 to 9.
